# EUROPEAN PATENT APPLICATION

(11) **EP 1 803 346 A2**
(43) Date of publication of application: **04.07.2007**
(21) Application number: 06025198.0
(22) Date of filing: 06.12.2006
(51) Int. Cl.: A01G 9/02, A01G 27/00

(54) **Plant cultivation device**

(30) Priority: 27.12.2005 IT MI20052495
(71) Applicant: Ecology S.R.L., 20064 Gorgonzola MI (IT); Di Giulio, Alessandro Maria, 06100 Perugia (PG) (IT)
(72) Inventor: Di Giulio, Alessandro Maria, 6100 Perugia (IT); Passoni, Matteo, 20064 Gorgonzola (Milan) (IT)
(74) Representative: Pesce, Michele

(57) **Abstract**

The plant cultivation device (1) comprises a frame (2) fixable to a wall (3) and supporting a first panel (7) presenting means (9) for retaining plants (10) with their roots (11) free in air in correspondence with a rear portion of the first panel (7) and their leaves (12) in correspondence with a front portion of said first panel (7). The device (1) also presents, in correspondence with the rear portion of the first panel (7), means (17) for dispensing water and/or fertilizer onto the roots (11) of the plants (10).

## Description

The present invention relates to a plant cultivation device.

Traditional cultivation devices for house plants are based on the use of containers of various materials containing a mixture of organic substrates such as soil, peat, and inorganic substrates such as perlite, etc.

These traditional systems require the pots containing the plants to be located on the floor, on tables or on shelves, hence on horizontal surfaces; this constitutes a considerable restraint in the light of the current tendency to build houses of increasingly smaller dimensions, the space within which is therefore increasingly more precious.

Moreover the traditional systems of the stated type have the considerable drawback of not being able to be used in rooms in which soil must not be present, such as hospitals, food administration premises, etc., while at the same time requiring continuous and careful maintenance, in particular the periodical replacement of the substrate.

To this must be added the fact that the operations involved in cultivation are not simple and are not within the capacity of everybody, and in particular transplanting a plant by traditional systems requires much attention and experience for the plant inserted into the system to take root, then when the plant ages or is to be changed its removal is difficult because the roots have to be excavated before removing it, this requiring considerable time and producing much dirt.

The technical aim of the present invention is therefore to provide a plant cultivation device by which the stated drawbacks of the known art are eliminated.

Within the scope of this technical aim, an object of the invention is to provide a plant cultivation device which does not suffer from the limitation of having to be necessarily positioned on a horizontal surface.

Another object of the invention is to provide a device which enables plants to be cultivated even in places in which soil must not be present; in particular, the device of the invention can be used to cultivate plants in hospitals, canteens, etc.

A further object of the invention is to provide a device which does not require careful periodic maintenance to ensure plant wellbeing; in particular, the device of the invention does not require periodic soil replacement, as instead is required in traditional systems.

A further object of the invention is to provide a device by which cultivation operations, such as plant transplanting or removal, are simple, rapid and clean (in the sense of largely limiting dirt).

The technical aim, together with these and further objects, are attained according to the present invention by a plant cultivation device in accordance with claim 1.

Other characteristics of the invention are defined in the subsequent claims.

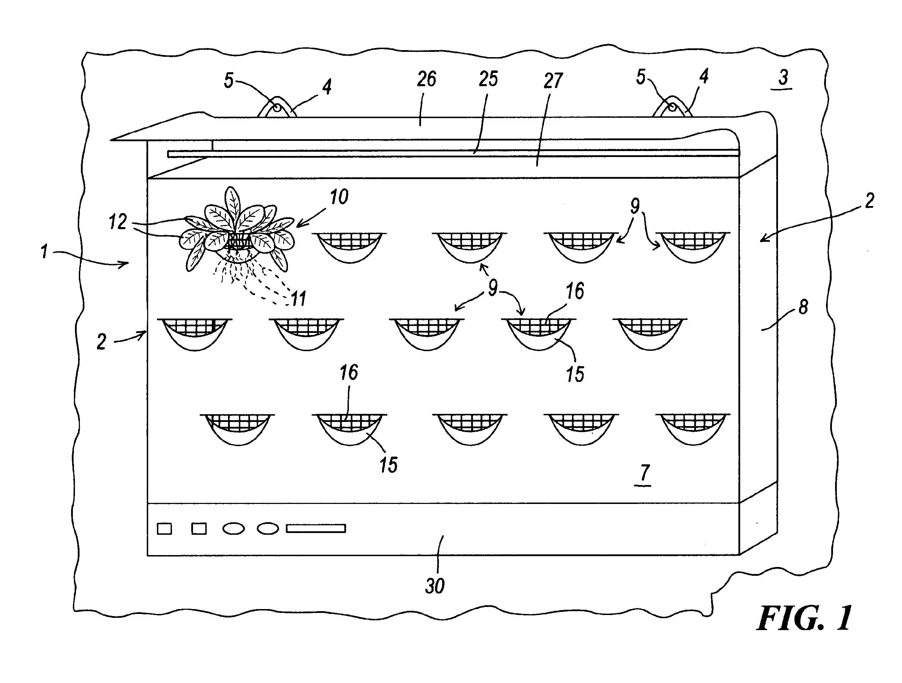

Further characteristics and advantages of the invention will be more apparent from the description of a preferred but non-exclusive embodiment of the device of the invention, illustrated by way of non-limiting example in the accompanying drawings, in which: '
Figure 1 is a perspective view of a device according to the invention; and

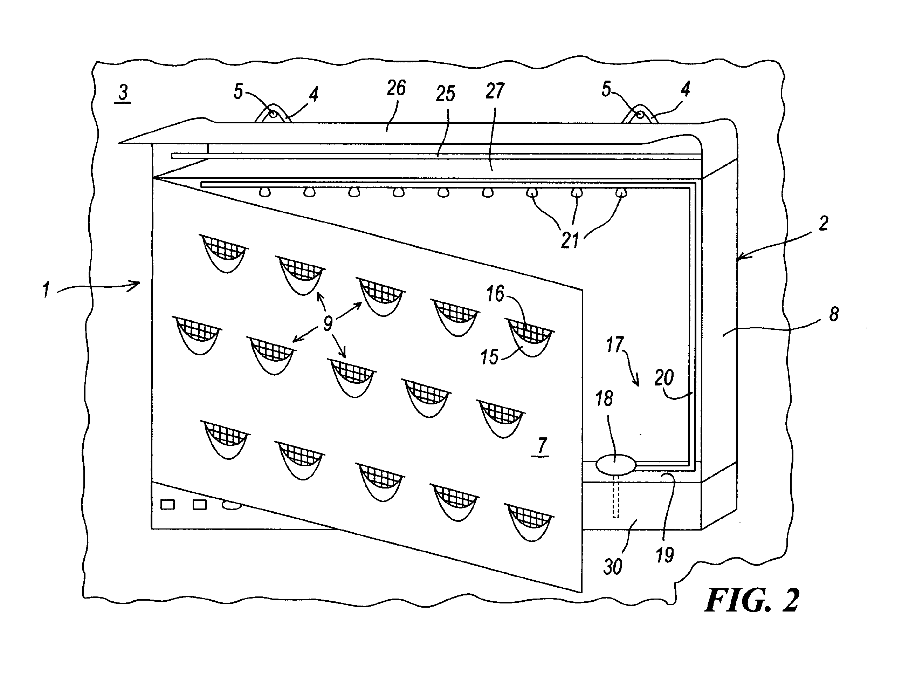

Figure 2 is a perspective view of the device of Figure 1 with a front panel partly removed.

With reference to said figures, these show a plant cultivation device indicated overall by the reference numeral 1.

The device 1 comprises a frame 2 of metal or equivalent material fixable to a wall 3 for example by hooks 4 mounted on nails 5 fixed into the wall 3.

The frame 2 supports a first panel 7 of plastic, glass or other suitable material, fixed to the side profile bars 8 of the frame 2.

The panel 7 presents retention means 9 for plants 10 (consisting in particular of foliage plants) with their roots 11 free in air in correspondence with a rear portion of the first panel 7 and their leaves 12 in correspondence with a front portion of the first panel 7 (rear and front referring to the device 1 hanging from the wall 3, hence the front part of the panel 7 is that intended to remain in view when the device is positioned on the wall and the rear part is that intended to remain hidden).

The retention means 9 comprise a seat to house the plants 10, which is defined by a convex wall 15 projecting from the front part of the panel 7 and a grid 16 bounding the rear part of the seat 9.

The device 1 also presents means 17 for dispensing water and/or fertilizer onto the roots 11 of the plants 10, these means being provided in correspondence with the rear portion of the first panel 7.

The dispensing means 17 comprise a pump 18 which draws from a reservoir 19 for containing water and/or fertilizer, and is connected to a transport pipe 20.

The transport pipe 20 presents one or more spray nozzles 21.

The reservoir 19 is defined by the lower profile bar 30 of the frame 2.

The device also presents one or more lighting lamps 25; in the illustrated example the device presents only one lamp 25 housed in correspondence with a portion 26 projecting from an upper profile bar 27 of the frame 2.

The device can also present a second panel fixable to the rear of the frame 2 to define between the first and second panel a chamber in which the roots 11 of the plants 10 and the pump 18 are contained.

In a preferred embodiment, the frame 2 presents a modular structure, a first panel 7 being fixed in correspondence with each module.

The device 1 enables foliage plants to be cultivated on vertical surfaces without the use of soil or other substrates.

It is intended to form part of the furnishing of internal environments, such as private dwellings, offices, hotels, banks and buildings in general.

The device also enables plants to be grown vertically, and can be used to decorate walls and/or be placed on movable supports acting as greenery alcoves.

Advantageously, the plants cultivated by the present device develop very rapidly as the roots can acquire nutrient elements and water at a higher rate.

The panel 7 in which the seats 9 for the plants 10 are disposed is openable (for example hinged) to allow maintenance, consisting of cleaning the panel 7, removing those roots no longer functional and anything else required.

Automatic systems are also present for automatically controlling water and nutrient distribution, together with systems for indicating lack of water, and whatever else is required for optimum plant cultivation, for example a water temperature regulating system.

The system is completed by a suitable electrical apparatus provided with energy storage equipment and/or an electric mains connection.

The system is versatile in that all types of plants can be cultivated, from cactuses to hydrophilic plants, as the roots are suspended in air and are periodically irrigated with water and nutrient and do not undergo root asphyxia or water shortage phenomena. The system is modular, can be produced in any shape and size and can be adapted to the furnishing requirements, and by being fitted with an independent specific lighting system can also be located in interiors without natural light.

The device conceived in this manner is susceptible to numerous modifications and variants, all falling within the scope of the inventive concept; moreover all details can be replaced by technically equivalent elements.

In practice, the materials used and the dimensions can be chosen at will according to requirements and the state of the art.

## Claims

1. A plant cultivation device (1) **characterised by** comprising a frame (2) fixable to a wall (3) and supporting a first panel (7) presenting means (9) for retaining plants (10) with their roots (11) free in air in correspondence with a rear portion of the first panel (7) and their leaves (12) in correspondence with a front portion of said first panel (7), said device (1) also presenting, in correspondence with the rear portion of the first panel (7), means (17) for dispensing water and/or fertilizer onto the roots (11) of the plants (10).

2. A device (1) as claimed in one or more of the preceding claims, **characterised in that** said retention means (9) comprise a seat to house said plants (10).

3. A device (1) as claimed in one or more of the preceding claims, **characterised in that** said seat is defined by a wall (15) projecting from the front part of the first panel (7) and a grid (16) bounding the rear part.

4. A device (1) as claimed in one or more of the preceding claims, **characterised in that** said dispensing means (17) comprise a pump (18) which draws from a reservoir (19) for containing water and/or fertilizer, and is connected to a transport pipe (20).

5. A device as claimed in one or more of the preceding claims, **characterised in that** said transport pipe (20) presents one or more irrigation nozzles (21).

6. A device (1) as claimed in one or more of the preceding claims, **characterised in that** said reservoir (19) is defined by the lower profile bar (30) of the frame (2).

7. A device (1) as claimed in one or more of the preceding claims, **characterised by** presenting one or more lighting lamps (25).

8. A device (1) as claimed in one or more of the preceding claims, **characterised in that** said lamps (25) are housed in correspondence with a portion (26) projecting from an upper profile bar (27) of the frame (2).

9. A device (1) as claimed in one or more of the preceding claims, **characterised by** presenting a second panel fixable to the rear of said frame (2) to define between said first and said second panel a chamber in which the roots and the pump are contained.

10. A device (1) as claimed in one or more of the preceding claims, **characterised in that** at least said first panel (7) is secured to the side profile bars (8) of said frame (2).

11. A device as claimed in one or more of the preceding claims, **characterised in that** said frame (2) presents a modular structure, a first panel (7) being fixed in correspondence with each module.

12. A device (1) as claimed in one or more of the preceding claims, **characterised in that** said first panel (7) is openable to allow maintenance.

13. A device (1) as claimed in one or more of the preceding claims, **characterised by** comprising automatic systems for automatically controlling water and nutrient distribution and/or systems for indicating lack of water.

14. A device (1) as claimed in one or more of the preceding claims, **characterised by** comprising a water temperature regulating system.

15. A device (1) as claimed in one or more of the preceding claims, **characterised by** comprising an electrical apparatus provided with energy storage equipment and/or an electric mains connection.
